# EUROPEAN PATENT APPLICATION

(11) **EP 4 318 790 A1**
(43) Date of publication of application: **07.02.2024**
(21) Application number: 21934455.3
(22) Date of filing: 28.09.2021
(51) Int. Cl.: H01M 50/581

(54) **BATTERY MODULE AND POWER-CONSUMING DEVICE**

(30) Priority: 30.03.2021 CN 202110341181
(71) Applicant: DONGGUAN POWERAMP TECHNOLOGY LIMITED, Dongguan, Guangdong 523000 (CN)
(72) Inventor: LI, Kunlong, Dongguan, Guangdong 523000 (CN)
(74) Representative: Icosa
(86) International application number: PCT/CN2021/121366
(87) International publication number: WO 2022/205818

(57) **Abstract**

This application relates to a battery module, and further relates to an electrical device. The battery module includes a shell, a battery cell assembly disposed in the shell, a circuit board, a conductive assembly, and a first structural member. The circuit board is electrically connected to the battery cell assembly; the conductive assembly is electrically connected to the circuit board, and the conductive assembly includes a first conductive member and a second conductive member; and the first structural member is disposed on a side of the battery cell assembly adjacent to the conductive assembly, and the first structural member is movable in a first direction, such that the first conductive member is connected to or separated from the second conductive member, the first direction being a direction from the battery cell assembly to the circuit board. According to the battery module provided above, when the battery cell assembly produces gas and swells, the swelling battery cell assembly pushes the first structural member to move in the first direction, such that the first conductive member is pushed to be connected to or separated from the second conductive member to limit further swelling of the battery cell assembly.

## Description

### TECHNICAL FIELD

This application relates to the technical field of lithium batteries, and in particular, to a battery module and an electrical device.

### BACKGROUND

When an existing soft pack lithium battery is normally used for a long time or an abnormal condition occurs, internal battery cells will produce gas and subsequently swell. When a swelling amount of the battery cells reaches a certain degree, the battery cells will explode, and if swelling of the battery cells cannot be controlled in time, the battery will have a series of potential safety hazards during use.

### SUMMARY

In view of this, it is necessary to provide a battery module capable of effectively controlling swelling of battery cells, and an electrical device to solve the foregoing technical problems.

An embodiment of this application provides a battery module. The battery module includes a shell, a battery cell assembly disposed in the shell, a circuit board, a conductive assembly, and a first structural member. The circuit board is electrically connected to the battery cell assembly; the conductive assembly is electrically connected to the circuit board, and the conductive assembly includes a first conductive member and a second conductive member; and the first structural member is disposed on a side of the battery cell assembly adjacent to the conductive assembly, and the first structural member is movable in a first direction, such that the first conductive member is connected to or separated from the second conductive member, the first direction being a direction from the battery cell assembly to the circuit board.

According to the foregoing solution, the first structural member is disposed between the battery cell assembly and the conductive assembly in such a way that when the battery cell assembly produces gas and swells, the swelling battery cell assembly pushes the first structural member to move in the first direction, such that the first conductive member is pushed to be connected to or separated from the second conductive member to limit further swelling of the battery cell assembly.

In a possible implementation, when viewed in the first direction, the first conductive member and the second conductive member partially overlap.

According to the foregoing solution, the first conductive member and the second conductive member partially overlap in the first direction in such a way that when the battery cell assembly swells and pushes the first structural member to move in the first direction, the first conductive member can be connected to or separated from the second conductive member.

In a possible implementation, the first conductive member includes a first fixing portion, a first connecting portion and a first contact portion that are disposed sequentially; and the first fixing portion is disposed on the circuit board, the first connecting portion is disposed opposite to the first structural member, the second conductive member is provided with a second contact portion, and the first contact portion is connected to or separated from the second contact portion. According to the foregoing solution, the first connecting portion is disposed opposite to the first structural member in such a way that when the battery cell assembly swells and drives the first structural member to move in the first direction, the first structural member makes contact with the first connecting portion and drives the first contact portion to move in the first direction in such a way that the first conductive member is connected to or separated from the second conductive member.

In a possible implementation, the first connecting portion includes a first portion and a second portion. The first portion is substantially disposed in a horizontal direction, and the second portion is inclined with respect to the first portion.

In a possible implementation, the second conductive member further includes a second fixing portion, the second fixing portion is disposed on the circuit board, and in the first direction, the second contact portion is located under the first contact portion and connected to the first contact portion.

In a possible implementation, the first contact portion and the second contact portion are connected in a contact mode. According to the foregoing solution, the second fixing portion is fixed to the circuit board to fix the second conductive member and driven by the first structural member in such a way that the first contact portion is connected to or separated from the second contact portion, thereby realizing connection or separation of the first conductive member and the second conductive member. The second contact portion is disposed under the first contact portion in the first direction, and the first contact portion and the second contact portion are connected in the contact mode, such that when the battery cell assembly swells and drives the first structural member to move in the first direction, the second contact portion can be driven to be separated from the first contact portion, thereby disconnecting a main circuit of the battery module to relieve further swelling of the battery module.

In a possible implementation, the first contact portion and the second contact portion are electrically connected to a position between a positive electrode and a negative electrode of the battery module. When the first contact portion and the second contact portion are disconnected, the positive electrode and the negative electrode of the battery module are disconnected, and the battery module stops charging or discharging, i.e., the battery module stops working.

In a possible implementation, the first contact portion and the second contact portion are electrically connected to the circuit board. When the first contact portion and the second contact portion are disconnected, the circuit board controls an input or output current, etc. of the battery module to limit swelling of the battery cell assembly. For example, the circuit board controls to shut off the input or output current of the battery module.

In a possible implementation, the second conductive member further includes a second fixing portion, the second fixing portion is disposed on the circuit board, and in the first direction, the second contact portion is located over the first contact portion and separated from the first contact portion.

According to the foregoing solution, the second contact portion is disposed over the first contact portion in a separated mode in the first direction, such that when the battery cell assembly swells and drives the first structural member to move, the first structural member pushes the first contact portion to be connected to the second contact portion so as to connect the first conductive member with the second conductive member, and a management and control system detects a conducting current to protect the battery module.

In a possible implementation, in the first direction, the first structural member is provided with a first face facing battery cells, and in a natural state, a vertical distance from the first face to the battery cells is X1; in the first direction, the first structural member is provided with a second face configured to push the first connecting portion, and in a natural state, a vertical distance from the second face to the first connecting portion is X2; in the first direction, a total amount of swelling of the battery cell assembly is X; and when X > X1 + X2, the swelling battery cell assembly pushes the first contact portion to be separated from the second contact portion.

According to the foregoing solution, lengths of X1 and X2 are controlled in such a way that the battery cell assembly swells and pushes the first structural member to move in the first direction, the first structural member pushes the first connecting portion to move in such a way that the first contact portion is separated from the second contact portion, the main circuit of the battery module is disconnected, and the battery module is still in a safe state, thereby reducing potential safety hazards.

In a possible implementation, an opening is provided on the circuit board, and the first contact portion is disposed in the opening.

According to the foregoing solution, the first contact portion is provided in the opening in such a way that when the first structural member moves in the first direction, the first contact portion is advantageously pushed to be connected to the second contact portion.

In a possible implementation, the battery module further includes a bearing member, the bearing member is disposed on the shell, the bearing member is located between the battery cell assembly and the circuit board, a first through hole is provided on the bearing member, and the first through hole is configured to allow the first structural member to pass through in such a way that the first conductive member is connected to or separated from the second conductive member.

According to the foregoing solution, the bearing member is disposed between the battery cell assembly and the circuit board, and the first through hole is provided on the bearing member, such that the first structural member is disposed in the first through hole to facilitate mounting of the first structural member.

In a possible implementation, the first structural member includes a cantilever portion and an extending portion, the cantilever portion is disposed between the bearing member and the battery cell assembly, and the extending portion passes through the first through hole in such a way that the first conductive member is connected to or separated from the second conductive member.

According to the foregoing solution, the cantilever portion is disposed in the first through hole between the bearing member and the battery cell assembly, and the extending portion is located in the first through hole, such that when the extending portion moves, the first connecting portion can be pushed to move and drive the first conductive member to be connected to or separated from the second conductive member.

In a possible implementation, the first structural member and the bearing member are of an integrally formed structure, and the first structural member and the bearing member are integrally formed through an injection molding process.

In a possible implementation, the battery module further includes a heat insulation member, an accommodating groove is provided on a side face of the first structural member facing the second conductive member, and the heat insulation member is disposed in the accommodating groove.

According to the foregoing solution, by disposing the heat insulation member in the accommodating groove, heat transfer between the second conductive member and the battery cells is insulated, and heat produced by a short circuit between the first conductive member and the second conductive member is prevented from being transferred to the battery cell assembly, thereby reducing the impact of heat transfer on the battery cell assembly.

An electrical device includes the foregoing battery module.

The battery module of this application includes the shell, the battery cell assembly disposed in the shell, the circuit board, the conductive assembly, and the first structural member. According to the foregoing solution, the first structural member is disposed between the battery cell assembly and the conductive assembly in such a way that when the battery cell assembly produces gas and swells, the swelling battery cell assembly pushes the first structural member to move in the first direction so as to push the first conductive member to be connected to or separated from the second conductive member, thereby disconnecting a main circuit of a battery to control further swelling of the battery cell assembly.

### BRIEF DESCRIPTION OF DRAWINGS

FIG. 1 is a three-dimensional schematic structural diagram of a battery module according to an embodiment;
FIG. 2 is a schematic structural diagram of the battery module shown in FIG. 1 after a sealing member is attached thereto;
FIG. 3 is a sectional diagram of the battery module shown in FIG. 2 in an I-I direction;
FIG. 4 is a front view of the sealing member shown in FIG. 2;
FIG. 5 is a three-dimensional schematic structural diagram of a battery module according to another embodiment;
FIG. 6 is a three-dimensional schematic structural diagram of a conductive assembly shown in FIG. 5;
FIG. 7 is a three-dimensional schematic structural diagram of a top bracing assembly shown in FIG. 1;
FIG. 8 is a top view of the battery module shown in FIG. 1;
FIG. 9 is a schematic diagram of an extending portion shown in FIG. 8 when disposed at different positions; and
FIG. 10 is a three-dimensional schematic structural diagram of battery cells and buffer members shown in FIG. 1.

**Description of reference signs of main components**

| | |
|---|---|
| Battery module | 100 |
| Shell | 10 |
| Heat dissipating region | 11 |
| Heat dissipating hole | 111 |
| Sealing member | 20 |
| First sealing region | 21 |
| Second sealing region | 22 |
| Third sealing region | 23 |
| Battery cell assembly | 30 |
| Battery cell | 31 |
| Circuit board | 40 |
| First fixing groove | 41 |
| Opening | 42 |
| Second fixing groove | 43 |
| First mounting hole | 44 |
| Conductive assembly | 50 |
| First conductive member | 51 |
| First fixing portion | 511 |
| First contact portion | 512 |
| First connecting portion | 513 |
| First portion | 5131 |
| Second portion | 5132 |
| Second conductive member | 52 |
| Second fixing portion | 521 |
| Second contact portion | 522 |
| Top bracing assembly | 60 |
| First structural member | 61 |
| First face | 61a |
| Second face | 61b |
| Cantilever portion | 611 |
| Extending portion | 612 |
| Accommodating groove | 6121 |
| Bearing member | 62 |
| First through hole | 621 |
| Second through hole | 622 |
| Third through hole | 624 |
| Second mounting hole | 625 |
| First center line | L1 |
| Second center line | L2 |
| Buffer member | 70 |
| Heat insulation member | 80 |
| First direction | A |
| Second direction | A" |
| Horizontal direction | B |
| Vertical distance from first face to battery cells | X1 |
| Vertical distance from second face to first connecting portion | X2 |
| Total amount of swelling of battery cells | X |
| Thickness of battery cell assembly in first direction | T |
| Vertical distance from gravity center of top bracing member to first center line | a |
| Vertical distance from gravity center of top bracing member to second center line | b |

### DETAILED DESCRIPTION OF EMBODIMENTS

Technical solutions in some embodiments of this application will be described below in conjunction with accompanying drawings in some embodiments of this application. Apparently, the described some embodiments are merely some rather than all of the embodiments of this application.

It is to be noted that when one assembly is referred to as being "connected to" another assembly, it may be directly connected to the another assembly, or there may also be an assembly disposed therebetween. When one assembly is referred to as being "disposed on" another assembly, it may be directly disposed on the another assembly, or there may also be an assembly disposed therebetween. The terms "top", "bottom", "upper', "lower", "left", "right", "front", "back" and other similar expressions used herein are merely for the purpose of illustration.

Unless otherwise defined, all technical and scientific terms used herein have the same meanings as commonly understood by a person skilled in the technical field to which this application belongs. The terms used in the description of this application are merely intended to describe specific some embodiments but not to limit this application.

An embodiment of this application provides a battery module. The battery module includes a shell, a battery cell assembly disposed in the shell, a circuit board, a conductive assembly, and a first structural member. The circuit board is electrically connected to the battery cell assembly; the conductive assembly is electrically connected to the circuit board, and the conductive assembly includes a first conductive member and a second conductive member; and the first structural member is disposed on a side of the battery cell assembly adjacent to the conductive assembly, and the first structural member is movable in a first direction, such that the first conductive member is connected to or separated from the second conductive member, the first direction being a direction from the battery cell assembly to the circuit board.

According to the battery module provided above, the first structural member is disposed between the battery cell assembly and the conductive assembly in such a way that when the battery cell assembly produces gas and swells, the swelling battery cell assembly pushes the first structural member to move in the first direction so as to push the first conductive member to be connected to or separated from the second conductive member, thereby disconnecting a main circuit of a battery to control further swelling of the battery cell assembly.

Some embodiments of this application are described in detail below in conjunction with the accompanying drawings. The following some embodiments and features in some embodiments may be combined with each other without conflict.

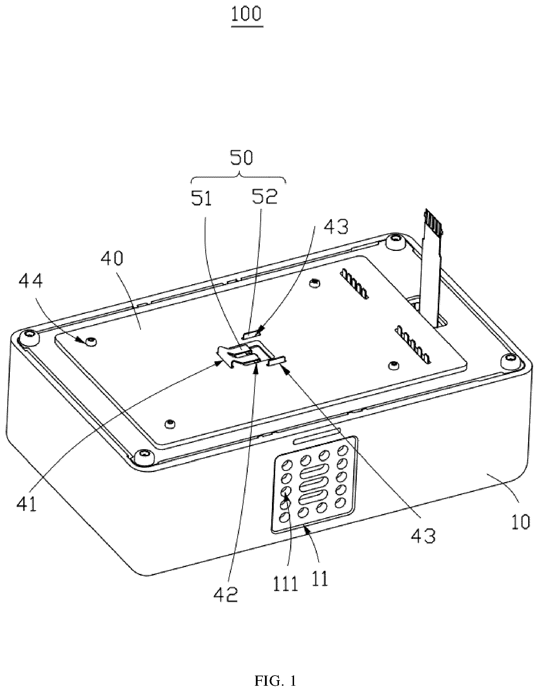

Referring to FIG. 1, FIG. 2, and FIG. 3, an embodiment of this application provides a battery module 100. The battery module includes a shell 10, a battery cell assembly 30 disposed in the shell 10, a circuit board 40, a conductive assembly 50, and a top bracing assembly 60. Further, the top bracing assembly 60 includes a first structural member 61. The circuit board 40 is electrically connected to the battery cell assembly 30. The conductive assembly 50 is electrically connected to the circuit board 40, and the conductive assembly 50 includes a first conductive assembly 51 and a second conductive assembly 52. The first structural member 61 is disposed on a side of the battery cell assembly adjacent to the conductive assembly 50. The first structural member 61, the conductive assembly 50 and the circuit board 40 are disposed in a first direction A. The first structural member 61 is movable in the first direction A, such that the first conductive member 51 is connected to or separated from the second conductive member 52, the first direction A being a direction from the battery cell assembly 30 to the circuit board 40.

The shell 10 includes a heat dissipating region 11, and a plurality of heat dissipating holes 111 are provided on the heat dissipating region 11. In one embodiment, the heat dissipating region 11 is disposed on a side wall of the shell 10, and the heat dissipating holes 111 communicate with the shell 10. When the battery cell assembly 30 produces gas and heat, the produced gas and heat are discharged from the heat dissipating holes 111 in the heat dissipating region 11, which is conducive to heat dissipation of the battery cell assembly 30.

The battery cell assembly 30 further includes a sealing member 20, and the sealing member 20 is attached to the heat dissipating region 11 and shields the plurality of heat dissipating holes 111 to limit other impurities, e.g. water, from entering the shell 10 and influencing use of the battery module 100. In other embodiments, the battery module 100 further includes an insulating member disposed in the shell 10. The insulating member is formed by disposing and curing a flowing resin, e.g. a pouring sealant, in the shell 10. The sealing member 20 shields the heat dissipating holes 111 to reduce the flowing resin inside the shell 10 spilling out from the heat dissipating holes 111 before curing.

In one embodiment, the sealing member 20 includes, but is not limited to, a sticker. Preferably, the sealing member 20 is a structure capable of blocking the heat dissipating holes 111 and being separated from the shell 10.

The battery module 100 further includes gluing members (not shown in the figures). The sealing member 20 is attached to the heat dissipating region 11 through the gluing members. In one embodiment, the gluing members include, but are not limited to, double-sided adhesive tapes. Preferably, the gluing members are structures with adhesive properties.

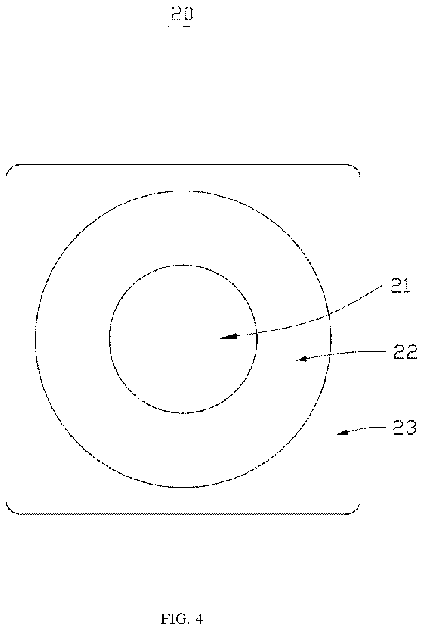

In conjunction with FIG. 1, FIG. 2, FIG. 3, and FIG. 4, the sealing member 20 includes a first sealing region 21, a second sealing region 22, and a third sealing region 23. That is, the first sealing region 21, the second sealing region 22 and the third sealing region 23 are sequentially arranged around a gravity center of the sealing member 20 from inside to outside, and the second sealing region 22 is located between the first sealing region 21 and the third sealing region 23. Side face of the first sealing region 21 facing the shell 10 is coated with the gluing members, and side face of the third sealing region 23 facing the shell 10 iscoated with the gluing members, such that when the battery cell assembly 30 rapidly produces gas and heat, the produced gas breaks through the second sealing region 22 coated with no gluing members, and the gas in the shell 10 spills out from the shell 10, thereby reducing the pressure intensity of the shell 10 and reducing safety accidents. In some embodiments, when an interior of the shell 10 is compressed heavily, the produced gas can break through the second sealing region 22 coated with no gluing members and accordingly break through the first sealing region 21 and the third sealing region 23, thereby reducing the pressure intensity of the shell 10.

In one embodiment, the battery cell assembly 30 includes a plurality of stacked battery cells 31, but it is not limited thereto. For example, in another embodiment, the battery cell assembly 30 includes only one battery cell 31. Preferably, the plurality of battery cells 31 are sequentially stacked in the first direction A.

In one embodiment, the circuit board 40 is disposed on an upper end face of the shell 10 in the first direction A. Preferably, first mounting holes 44 are formed in four corners of the circuit board 40, and screws pass through the first mounting holes 44 to fix the circuit board 40 on the shell 10. It can be understood that providing positions of the circuit board 40 are not limited thereto. For example, in another embodiment, the circuit board 40 is provided on a side wall of the shell 10.

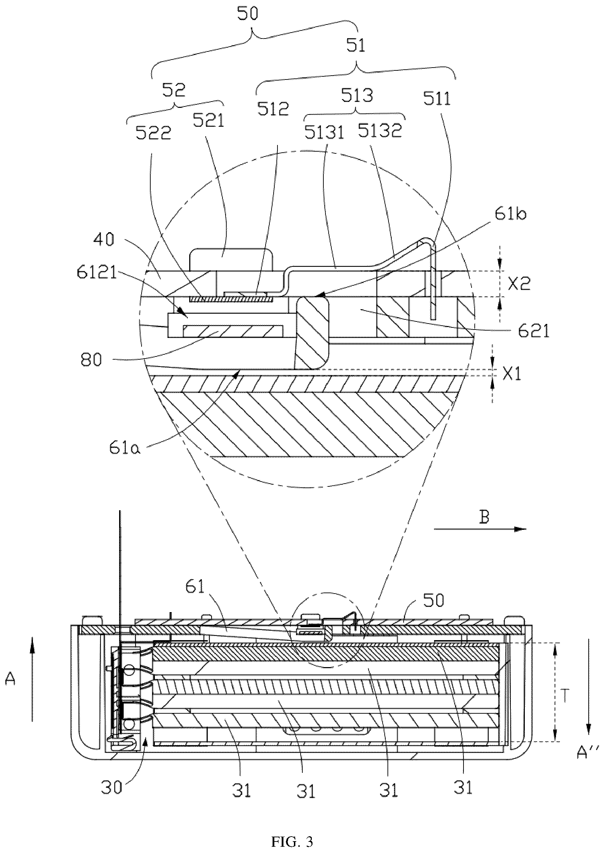

Referring to FIG. 3, the first conductive member 51 is electrically connected to the circuit board 40, and the first conductive member 51 includes a first fixing portion 511, a first connecting portion 513, and a first contact portion 512 that are disposed sequentially. Preferably, the first fixing portion 511, the first connecting portion 513, and the first contact portion 512 are integrally formed. The first fixing portion 511 is fixed to the circuit board 40. Preferably, the first fixing portion 511 is welded to the circuit board 40. The first contact portion 512 is configured to be connected to the second conductive member 52. The first connecting portion 513 is disposed between the first fixing portion 511 and the first contact portion 512, In the first direction A, the first connecting portion 513 is disposed opposite to the first structural member 61, such that when the battery cell assembly 30 produces heat and swells and drives the first structural member 61 to move, the first structural member 61 can push the first connecting portion 513 to move in such a way that the first contact portion 512 is connected to or separated from the second conductive member 52.

In one embodiment, the first connecting portion 513 includes a first portion 5131 and a second portion 5132. The first portion 5131 is substantially disposed in a horizontal direction B, and the second portion 5132 is inclined with respect to the first portion 5131. Preferably, the second portion 5132 is disposed outside the circuit board 40, and the second portion 5132 has elasticity and can bounce back the first portion 5131. On the other hand, the second portion 5132 can also play a buffer role to limit the first portion 5131 from pulling the first fixing portion 511 when moving upwards.

The second conductive member 52 is electrically connected to the circuit board 40. The second conductive member 52 includes second fixing portions 521 and a second contact portion 522, and the second fixing portions 521 are disposed at two ends of the second contact portion 522. The second fixing portions 521 are fixed to the circuit board 40, and the first structural member 61 can push the first contact portion 512 to make contact with or be separated from the second contact portion 522.

In one embodiment, the second contact portion 522 is disposed on a side of the circuit board 40 facing the battery cell assembly 30, the second contact portion 522 is disposed under an opening 42, and the first contact portion 512 is disposed in the opening 42 and connected to the second contact portion 522. In some other embodiments, the second contact portion 522 is disposed in the opening 42 and connected to the first contact portion 512.

In one embodiment, a first fixing groove 41, two second fixing grooves 43, and the opening 42 are formed in the circuit board 40. Preferably, the two second fixing grooves 43 are provided on two opposite sides of the opening 42, respectively, the two second fixing portions 521 stretch and are fixed into the two second fixing grooves 43, and the first fixing portion 511 stretches and is fixed into the first fixing groove 41. Preferably, the first fixing portion 511 is welded to the circuit board 40. Preferably, the second fixing portions 521 are welded to the circuit board 40.

When viewed in a second direction A", the first connecting portion 513 and the first contact portion 512 are located in the opening 42. The second direction A" is a direction opposite to the first direction A.

When viewed in the second direction A", the first contact portion 512 and the second contact portion 522 partially overlap in such a way that when the first contact portion 512 moves in the first direction A, the first contact portion 512 and the second contact portion 522 can be mutually connected or separated from each other.

In one embodiment, the first conductive member 51 and the second conductive member 52 include, but are not limited to, hardware sheets, and can also be other conductive structures capable of being connected in a contact mode, etc.

It is to be noted that fixing positions of the first fixing portion 511 and the second fixing portions 521 are not limited thereto. For example, in another embodiment, the first fixing portion 511 and the second fixing portions 521 can further be fixed to other portions in the shell 10, e.g., on a support.

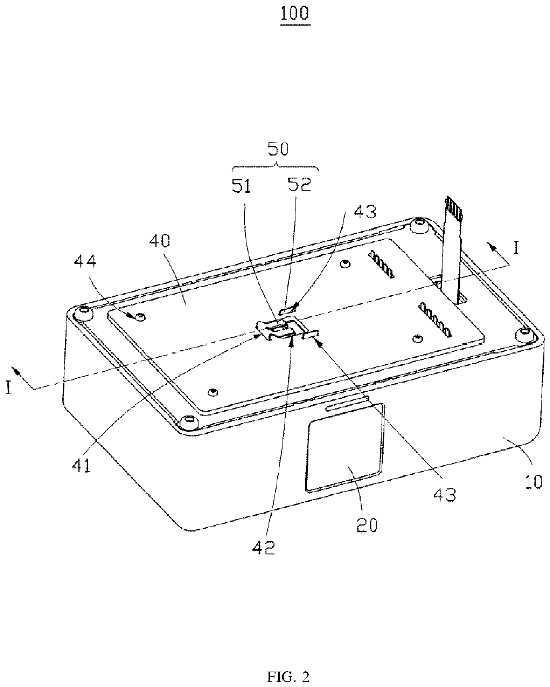

Referring to FIG. 2 and FIG. 3, in one embodiment, in the first direction A, the second contact portion 522 is closer to the battery cell assembly 30 compared to the first contact portion 512. When the battery is in a normal state, the first contact portion 512 and the second contact portion 522 are connected in a contact mode. When the battery cell assembly 30 produces heat and swells, a size of the battery cell assembly 30 is gradually increased, and the first structural member 61 is pushed to move in the first direction A, such that the first structural member 61 upwards jacks the first conductive member 51 to disconnect the first contact portion 512 from the second contact portion 522. In some embodiments, the first contact portion 512 and the second contact portion 522 are electrically connected to a position between a positive electrode and a negative electrode of the battery module 100. When the first contact portion 512 and the second contact portion 522 are disconnected, the positive electrode and the negative electrode of the battery module 100 are disconnected, and the battery module 100 stops charging or discharging, i.e., the battery module 100 stops working. In some embodiments, the first contact portion 512 and the second contact portion 522 are electrically connected to the circuit board 40. When the first contact portion 512 and the second contact portion 522 are disconnected, the circuit board 40 controls an input or output current, etc. of the battery module 100 to limit swelling of the battery cell assembly 30. For example, the circuit board 40 controls to shut off the input or output current of the battery module 100.

In one embodiment, when the swelling battery cell assembly 30 restores to the normal state, the first conductive member 51 moves in the second direction A", and the first contact portion 512 is connected to the second contact portion 522 again. In this case, a main circuit of the battery module 100 is connected, and the battery module 100 restores to a normal use state.

In one embodiment, when the first contact portion 512 and the second contact portion 522 are disconnected, through circuit design of the battery module 100 or design of the circuit board 40, the battery module 100 can be in a damaged state and cannot restore to normal use.

In one embodiment, the circuit board 40 is provided with a battery management system assembly to further control and manage a voltage, current, etc. of the battery module 100.

Further, in the first direction A, the first structural member 61 is provided with a first face 61a facing the battery cells 31, and in a natural state, the battery cell assembly30 does not swell, a vertical distance from the first face 61a to the battery cells 31 is X1. The first structural member 61 is provided with a second face 61b configured to push the first connecting portion 513, and in the natural state, the battery cell assembly 30 does not swell, a vertical distance from the second face 61b to the first connecting portion 513 is X2. A total amount of swelling of the battery cell assembly 30 is X (not shown in the figures). When X > X1 + X2, the swelling battery cell assembly 30 pushes the first contact portion 512 to be separated from the second contact portion 522.

Further, a thickness of the battery cell assembly 30 in the first direction A is T. In some embodiments, when X/T < 10%, the battery is in a normal working state. In some embodiments, when 10% < X/T < 20%, the battery cell assembly 30 swells, in this case, the first contact portion 512 and the second contact portion 522 are in a contact connection state, and the battery is in a swelling but working state. In some embodiments, when X/T > 20%, the first contact portion 512 is separated from the second contact portion 522, and the battery is in a failure state.

Preferably, the first face 61a is of a planer structure. When the swelling battery cell assembly 30 is squeezed on the first face 61a, portions of the battery cell assembly 30 on positions of the first face 61a are stressed evenly, and puncturing of the swelling battery cell assembly 30 due to contact with uneven portions is reduced.

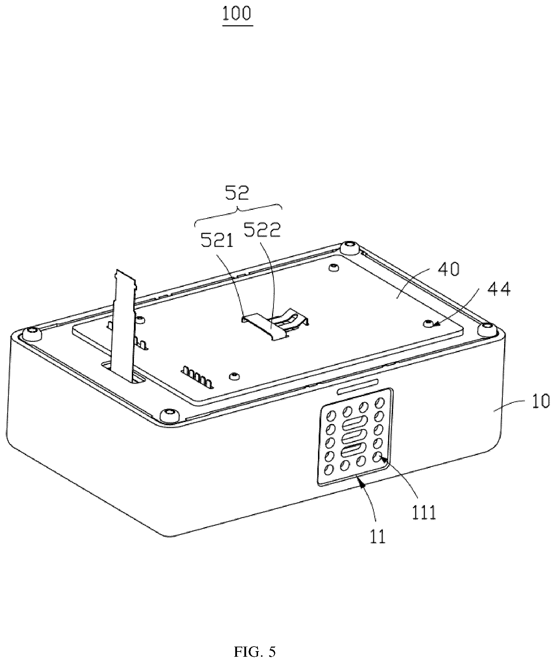

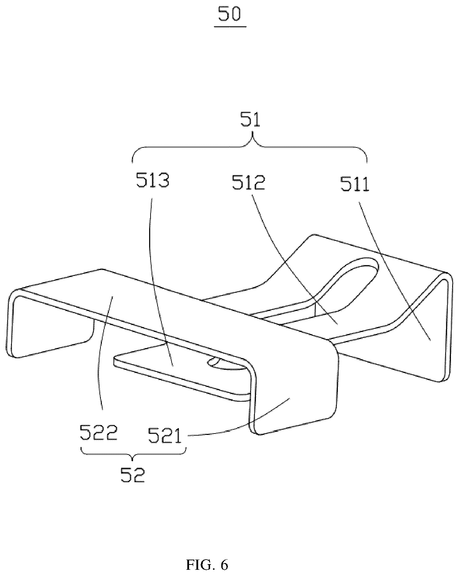

Referring to FIG. 5 and FIG. 6, in another embodiment, in the first direction A, the second contact portion 522 is farther from the battery cell assembly 30 compared to the first contact portion 512. When the battery is in the normal state, the first contact portion 512 is separated from the second contact portion 522. When the battery cell assembly 30 produces heat and swells, the size of the battery cell assembly 30 is gradually increased, and the first structural member 61 is pushed to move in the first direction A, such that the first structural member 61 upwards jacks the first conductive member 51 to make the first contact portion 512 abut against the second contact portion 522. In some embodiments, the first contact portion 512 and the second contact portion 522 are electrically connected to the positive electrode, the negative electrode and the circuit board 40 of the battery module 100. When the first contact portion 512 and the second contact portion 522 are disconnected, the circuit board 40 is disconnected from the positive electrode and the negative electrode of the battery module 100, and the battery module 100 is in the normal use state. In one embodiment, the first contact portion 512 and the second contact portion 522 are electrically connected to the battery management system assembly. When the first contact portion 512 and the second contact portion 522 are connected, the battery management system assembly communicates with the circuit board 40 and the battery module 100, detects a short-circuit current, and transmits short-circuit current information to the circuit board 40, and the circuit board 40 controls an input or output current, etc. of the battery module 100 to limit swelling of the battery cell assembly 30. For example, the circuit board 40 controls to shut off the input or output current of the battery module 100.

In one embodiment, when the swelling battery cell assembly 30 restores to the normal state, the first conductive member 51 moves in the second direction A", and the first contact portion 512 is separated from the second contact portion 522 again. In this case, the battery module 100 is disconnected from the battery management system assembly and the circuit board 40, and the battery module 100 restores to the normal use state.

In one embodiment, when the first contact portion 512 and the second contact portion 522 are connected, through circuit design of the battery module 100 or design of the circuit board 40, the battery module 100 can be in the damaged state and cannot restore to normal use.

In another embodiment, the first contact portion 512 and the second contact portion 522 are connected to the positive and negative electrodes and a fusing member (not shown in the figures), e.g. a fuse, of the battery module 100. When the battery management system assembly is in an abnormal state, the fusing member communicates with the positive and negative electrodes of the battery to form a circuit, and the circuit is disconnected at the fusing member, thereby shutting off the input or output current, etc. of the battery module 100 to limit swelling of the battery cell assembly 30.

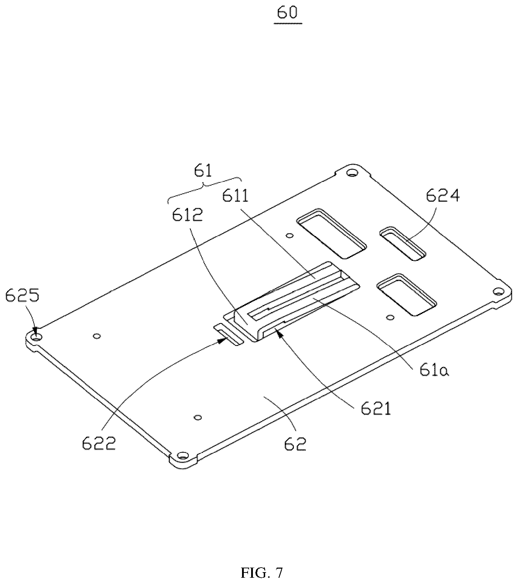

In conjunction with FIG. 3 and FIG. 7, in one embodiment, the battery module 100 includes a bearing member 62, and the bearing member 62 is fixed to the shell 10. Preferably, the bearing member 62 is located between the battery cell assembly 30 and the circuit board 40. Preferably, a first through hole 621 corresponding to the opening 42 is provided on the bearing member 62.

In one embodiment, second mounting holes 625 are formed in four corners of the bearing member 62, and screws pass through the second mounting holes 625 to fix the bearing member 62 on the shell 10. It can be understood that fixing modes of the bearing member 62 are not limited thereto. For example, in another embodiment, the bearing member 62 is welded or integrally formed on the shell 10. In one embodiment, the bearing member 62 includes, but is not limited to, a bearing plate. Preferably, the bearing member 62 is a structure capable of being disposed in the shell 10 and bearing the first structural member 61.

In one embodiment, the first structural member 61 is disposed on the bearing member 62. Preferably, the first structural member 61 is disposed on a side of the bearing member 62 facing the battery cell assembly 30. Preferably, the first structural member 61 is detachably fixed to the bearing member 62, e.g. fixed through bolts. Preferably, the first structural member 61 and the bearing member 62 are of an integrally formed structure, e.g. integrally formed through an injection molding process. The first structural member 61 is connected to the first contact portion 512 through the opening 42 and the first through hole 621 in such a way that the first contact portion 512 is connected to or disconnected from the second contact portion 522.

In one embodiment, one end of the first structural member 61 is connected to the bearing member 62, and the first structural member 61 includes a cantilever portion 611 and an extending portion 612. The extending portion 612 is connected to one end of the cantilever portion 611, the cantilever portion 611 is separated from the bearing member 62, and the extending portion 612 is separated from the bearing member 62, which is conducive to movement of the cantilever portion 611 and the extending portion 612 in the first direction. Preferably, the cantilever portion 611 is inclined with respect to the second direction, and one end of the cantilever portion 611 faces the battery cell assembly 30. The extending portion 612 is disposed in the first direction from one end of the cantilever portion 611. Preferably, the cantilever portion 611 has certain elasticity, and under rebound of the cantilever portion 611, the cantilever portion 611 moves in the second direction A" and further drives the extending portion 612 in such a way that the first contact portion 512 is connected to or separated from the second contact portion 522.

In one embodiment, the first structural member 61 is at least partially disposed in the first through hole 621. First through hole 621a second through hole 622 is formed in the bearing member 62, and the second through hole 622 is located beside the first through hole 621 and corresponds to the first fixing groove 41. An end portion of the first fixing portion 511 can stretch into the second through hole 622 to reduce interference of the first fixing portion 511 with the bearing member 62 during mounting.

Positioning grooves (not shown in the figures) are further formed in the bearing member 62. The positioning grooves are symmetrically provided on two opposite sides of the first through hole 621 in such a way that when the second conductive member 52 is mounted, the second contact portion 522 can be placed in the positioning grooves firstly, which is conducive to precise positioning of the second conductive member 52.

A third through hole 624 is further formed in the bearing member 62. When viewed in a third direction, the third through hole 624 is located outside the circuit board 40 so that a wiring harness in the shell 10 can be led out from the third through hole 624.

In one embodiment, the cantilever portion 611 and the extending portion 612 are made of a material capable of producing elastic deformation, e.g. elastic plastics. Thus, when the battery cell assembly 30 restores from a swelling state to a normal state, the cantilever portion 611 and the extending portion 612 can restore to original shapes and be located in the first through hole 621 in such a way that after abnormal swelling disappears, the battery module 100 can still be normally used.

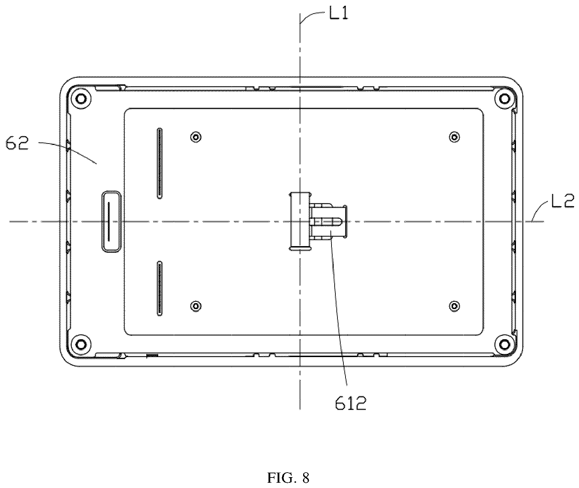

Referring to FIG. 8, in one embodiment, each of the battery cells includes an accommodating portion (not shown in the figure) and an electrode terminal (not shown in the figure) disposed outside the accommodating portion. The accommodating portion is configured to accommodate an electrode assembly. The accommodating portion is substantially of a rectangular structure, and when viewed in the first direction A, the extending portion 612 is substantially disposed in a center of the accommodating portion so as to more accurately detect swelling of a battery assembly.

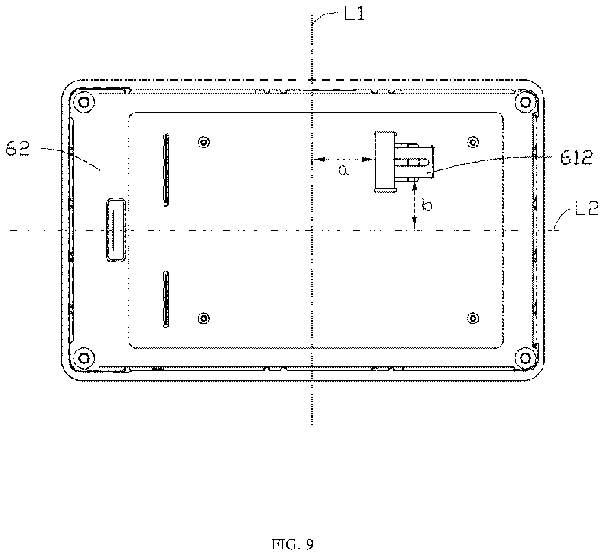

In one embodiment, when viewed in the first direction A, the extending portion 612 is disposed on other positions of the accommodating portion. Referring to FIG. 9, the bearing member 62 is a rectangular plate. Every two opposite side edges of the bearing member 62 are provided with a first center line L1 and a second center line L2, respectively. A vertical distance from a gravity center of the extending portion 612 to the first center line L1 is *a*, and a vertical distance from a gravity center of the extending portion 612 to the second center line L2 is *b*. The extending portion 612 is disposed at a junction of *a* and *b*.

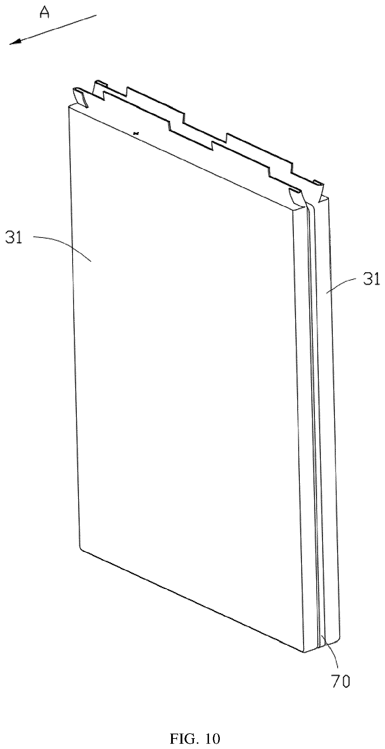

Referring to FIG. 10, the battery module 100 further includes buffer members 70. Each of the buffer members 70 is disposed between the corresponding two battery cells 31 so as to buffer squeezing force therebetween when the battery cells 31 produce heat and swell, and to reduce a damage rate of the two battery cells 31 when the battery cells swell.

In one embodiment, the buffer members 70 include, but are not limited to, foams. Preferably, the buffer members are elastically deformable structures.

In one embodiment, the battery module 100 further includes a heat insulation member 80. An accommodating groove 6121 is provided in a side face of the first structural member 61 facing the second conductive member 52. The heat insulation member 80 is disposed in the accommodating groove 6121 to limit heat transfer between the second conductive member 52 and the battery cells 31 and limit heat produced when the first conductive member 51 is connected to the second conductive member 52 from being transferred to the battery cell assembly 30, thereby reducing the impact of heat transfer on the battery cell assembly 30.

In one embodiment, the heat insulation member 80 includes, but is not limited to, a mica sheet. Preferably, the heat insulation member 80 is a structure with a heat insulation function.

In one embodiment, when a swelling amount of the plurality of battery cells 31 is less than 10%, the plurality of battery cells 31 squeeze the foams. In this case, there is no obvious change in the appearance of the battery module 100.

When the swelling amount of the plurality of battery cells 31 ranges from 10% to 20%, the battery module 100 swells in appearance. In this case, the plurality of battery cells 31 make contact with the first face 61a on the extending portion 612 and push the extending portion 612 to move in the first direction A, but the extending portion 612 does not push the first contact portion 512 to be separated from the second contact portion 522, and the battery is in the normal use state.

When the heat production and swelling amount of the plurality of battery cells 31 is greater than 20%, the extending portion 612 moves in the first direction A and pushes the first contact portion 512 to be separated from the second contact portion 522. In this case, the main circuit of the battery module 100 is disconnected. When abnormal swelling of the battery module 100 disappears, the first contact portion 512 restores to the original shape under an elastic action of the extending portion and makes contact with the second contact portion 522, such that the main circuit of the battery module 100 is connected, and the battery module 100 restores to a normal working state again.

According to the battery module 100 provided above, the first structural member 61 is disposed between the battery cell assembly 30 and the conductive assembly 50 in such a way that when the battery cell assembly 30 swells, the swelling battery cell assembly 30 pushes the first structural member 61 to move in the first direction A so as to push the first conductive member 51 to be connected to or separated from the second conductive member 52, thereby limiting use of a battery pack to control further swelling of the battery cell assembly 30.

In addition, a person of ordinary skill in the technical field should understand that the foregoing some embodiments are merely intended to illustrate this application rather than to limit this application. Appropriate changes and variations on the foregoing someembodiments shall fall within the scope of the disclosure of this application as long as they are within the essence, spirit and scope of this application.

## Claims

1. A battery module, comprising: a shell; a battery cell assembly disposed in the shell; wherein the battery module further comprises:
a circuit board electrically connected to the battery cell assembly;
a conductive assembly electrically connected to the circuit board, the conductive assembly comprising a first conductive member and a second conductive member; and
a first structural member disposed on a side of the battery cell assembly adjacent to the conductive assembly, wherein the first structural member is movable in a first direction, such that the first conductive member is connected to or separated from the second conductive member, the first direction being a direction from the battery cell assembly to the circuit board;.

2. The battery module according to claim 1, wherein when viewed in the first direction, the first conductive member and the second conductive member partially overlap.

3. The battery module according to claim 1, wherein the first conductive member comprises a first fixing portion, a first connecting portion and a first contact portion disposed sequentially;
the first fixing portion is disposed on the circuit board, the first connecting portion is disposed opposite to the first structural member;
the second conductive member is provided with a second contact portion; and the first contact portion is connected to or separated from the second contact portion.

4. The battery module according to claim 3, wherein the second conductive member further comprises a second fixing portion, the second fixing portion is disposed on the circuit board;
in the first direction, the second contact portion is located under the first contact portion and connected to the first contact portion.

5. The battery module according to claim 3, wherein the second conductive member further comprises a second fixing portion, the second fixing portion is disposed on the circuit board; and in the first direction, the second contact portion is located over the first contact portion and separated from the first contact portion.

6. The battery module according to claim 3 or 4, wherein in the first direction, the first structural member is provided with a first face facing the battery cell assembly, and in a natural state, a vertical distance from the first face to battery cells is X1;
in the first direction, the first structural member is provided with a second face configured to push the first connecting portion, and in a natural state, a vertical distance from the second face to the first connecting portion is X2;
in the first direction, a total amount of swelling of the battery cell assembly is X; and
when X > X1 + X2, the swelling battery cell assembly pushes the first structural member to move and the first contact portion is separated from the second contact portion.

7. The battery module according to claim 3, wherein an opening is provided on the circuit board, and the first contact portion is disposed in the opening.

8. The battery module according to claim 3, wherein the battery module further comprises a bearing member, the bearing member is disposed on the shell, the bearing member is located between the battery cell assembly and the circuit board;
a first through hole is provided on the bearing member, the first through hole is configured to allow the first contact portion to pass through to make the first conductive member connected to or separated from the second conductive member.

9. The battery module according to claim 8, wherein the first structural member comprises a cantilever portion and an extending portion, the cantilever portion is disposed between the bearing member and the battery cell assembly; and the extending portion is configured to pass through the first through hole to make the first conductive member connected to or separated from the second conductive member.

10. The battery module according to claim 1, wherein the battery module further comprises a heat insulation member, an accommodating groove is provided on a side face of the first structural member facing the second conductive member, and the heat insulation member is disposed in the accommodating groove.

11. An electrical device, comprising the battery module according to any one of claims 1 to 10.
